# EUROPÄISCHE PATENTSCHRIFT

(11) **EP 2 309 159 B1**
(45) Veröffentlichungstag und Bekanntmachung des Hinweises auf die Patenterteilung: **10.08.2016**
(21) Anmeldenummer: 10186480.9
(22) Anmeldetag: 05.10.2010
(51) Int. Cl.: A21C 11/16, F16K 11/076

(54) **Füllstromteiler**
Filling flow divider
Séparateur de flux de remplissage

(30) Priorität: 06.10.2009 DE 202009013467 U
(43) Veröffentlichungstag der Anmeldung: 13.04.2011
(73) Patentinhaber: VEMAG Maschinenbau GmbH, 27283 Verden/Aller (DE)
(72) Erfinder: Knodel, Peter, 28876 Oyten (DE)
(74) Vertreter: Eisenführ Speiser

(56) Entgegenhaltungen:
- EP-A1- 0 828 437
- FR-A1- 2 353 729
- NL-C1- 1 022 813
- US-A1- 2005 022 870
- US-A1- 2006 137 536

## Beschreibung

Die vorliegende Erfindung betrifft einen Füllstromteiler, und insbesondere einen Füllstromteiler zum Portionieren von Füllstoffen für eine Vielzahl von Füllbereichen gemäß dem Oberbegriff von Anspruch 1.

Mittels eines Füllstromteilers werden im Allgemeinen Füllstoffe, wie beispielsweise Wurstmasse, Cremes oder Pasten, auf verschiedene Füllbereiche oder Füllkanäle verteilt und in Verbindung mit einem Volumenstrom den einzelnen Verpackungen oder Gebinden zugeführt. Hierbei erfolgt die Verteilung der Füllstoffe auf die einzelnen Füllbereiche und gleichzeitig das Portionieren der Füllstoffe.

Ein Füllstromteiler zum Portionieren von Füllstoffen ist beispielsweise aus der Druckschrift EP 0 828 437 B1 bekannt, Hierbei wird ein dem Füllstromteiler zugeführter Füllstoff In den Füllstromteiler eingebracht und durch rotierende Einrichtungen auf die einzelnen Füllbereiche verteilt wobei eine Portionierung erreicht wird. Der Füllstromteiler umfasst einen in einem Hohlraum eines Gehäuses angeordneten und um eine Achse drehbaren Rotor, in den Flügelelemente eingesetzt sind, die in Öffnungen im Rotor gleitend beweglich sind und mittels einer Feder von der Rotorachse weg in radialer Richtung nach außen gedrückt werden, sodass die Flügelelemente außerhalb des Rotors an der Innenfläche des Hohlraums gleitend anliegen. Zwischen dem Rotor, zumindest zwei benachbarten Flügelelementen und der Innenwand des Hohlraums werden Kammern gebildet, die sich dynamisch in Abhängigkeit von der Drehung des Rotors um seine feste Achse und der Bewegung der Flügelelementen vergrößern und verkleinem. Entsprechend der mechanischen Ausgestaltung des Rotors, der Position seiner Achse in dem Hohlraum und der Form des Hohlraums wird eine bevorzugte Dreh-und Füllstoffströmungsrichtung erreicht.

Die mittels des Füllstromteilers zu verteilenden und zu portionierenden Füllstoffe können aus unterschiedlichen Bestandteilen zusammengesetzt sein, wobei sich die Bestandteile in Abhängigkeit von unterschiedlicher Viskosität oder Beschaffenheit und Größe nicht in allen Fällen ineinander lösen oder miteinander eine homogene Lösung im Sinne einer Emulsion bilden. Bestimmte Füllstoffe sind somit nur miteinander vermischt, Des Weiteren ist es erforderlich, dass die Portionierung mit einer bestimmten Genauigkeit erfolgt.

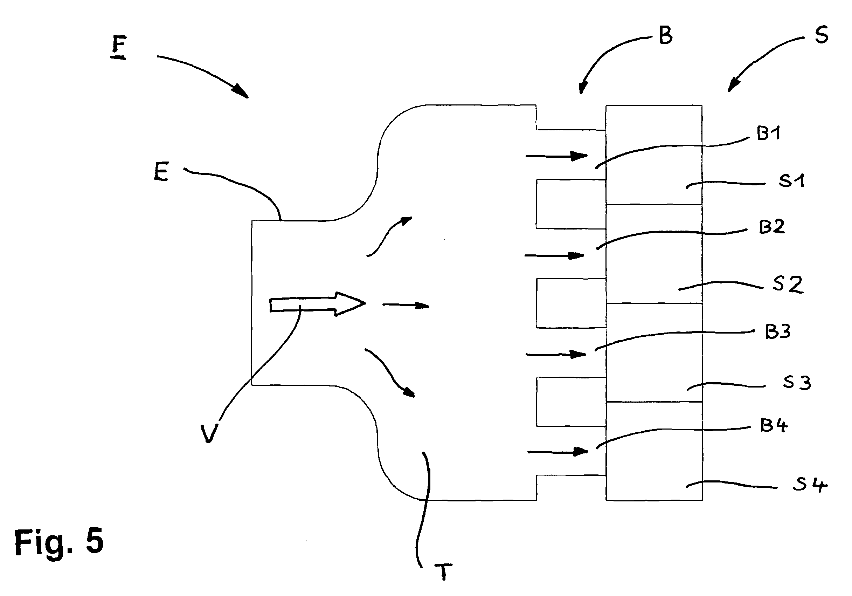

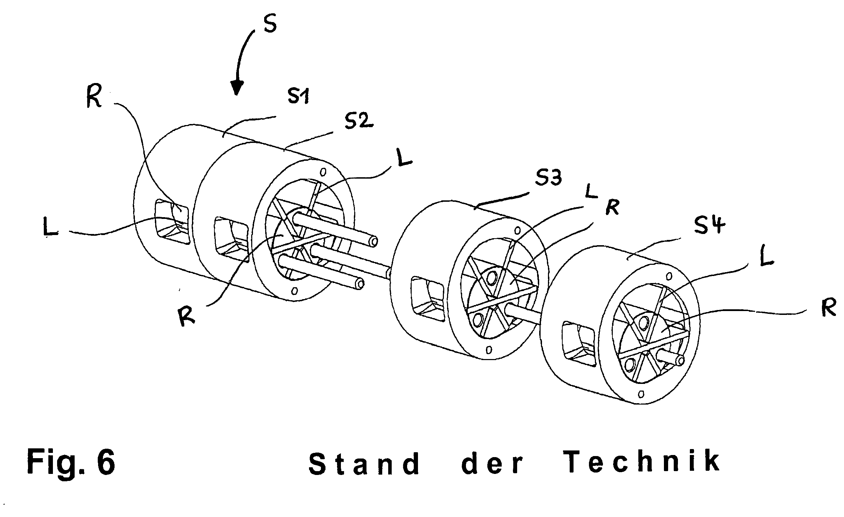

Eine bekannte Vorrichtung ist ebenfalls in den Figuren 5 und 6 gezeigt

Gemäß Fig. 5 ist ein Füllstromteiler F derart angeordnet, dass in einem Einlassbereich E des Füllstromteilers F ein Volumenstrom V des Füllstoffs (Füllstrom) zugeführt und innerhalb des Füllstromteilers F auf verschiedene Füllbereiche B (beispielsweise vier Füllbereiche B1, B2, B3 und B4) verteilt wird. An den Füllbereichen B sind einzelne Segmente S, beispielsweise die Segmente S1, S2, S3 und S4 angeordnet

Im Einzelnen wird der Füllstrom oder Volumenstrom V dem Füllstromteiler F zugeführt und in dem Verteilerbereich T im Inneren des Füllstromteilers F auf die einzelnen Füllbereiche B verteilt, Der Füllstoff (Volumenstrom V) wird über den jeweiligen Füllbereich B dem zugehörigen Segment S zugeführt und bewegt in dem jeweiligen Segment einen Rotor R mit Flügeleementen L. Die Rotoren R werden in Verbindung mit den Flügelelementen L gedreht, und es erfolgt in einem entsprechenden Auslassbereich der jeweiligen Segmente S des Füllstromteilers F die portionierte Ausgabe des Fallstoffs.

Bei dem vorstehend beschriebenen Füllstromteiler F besteht jedoch die Gefahr, dass bei verschiedenen Füllstoffen in Folge von unvermeidlichen Druckschwankungen und Druckspitzen bei dem Durchströmen des Füllstoffs durch den Füllstromteiler F und einem damit einhergehenden nicht linearen Verlauf einer Befüllung und Entleerung des Füllstromteilers Veränderungen des Füllstoffs auftreten und Ungenauigkeiten der Portionierung kaum vermieden werden können.

Aus US 2005/0022870 A1 ist ein Füllstromteller zum Portionieren eines Füllstoffs bekannt, mit zumindest zwei in Wirkverbindung miteinander stehenden Teilerelementen. Die Teilerelemente weisen einen Stator mit einer Hauptkammer, einen in der Hauptkammer relativ zum Stator drehbar angeordneten Rotor mit jeweils zumindest zwei Flügelelemente auf. Die Flügelelemente sind in radialer Richtung zur Drehachse des Rotors voneinander unabhängig verschiebbar und bewegen sich bei Drehung des Rotors in der Hauptkammer. Darüber hinaus weist der eine Rotor Zapfen auf, über die der Rotor mit dem anderen Rotor gekoppelt ist.

Des Weiteren ist aus FR 2 353 729 A1 eine Flügelzeilenpumpe bekannt, deren Rotoren mittels eines Antriebs in Drehung versetzt werden, um die Förderung eines Mediums durch die Pumpe umzusetzen. Jeder Rotor weist ein Flügelelement auf, das sich in radialer Richtung nicht bis zur Innenwand der Hauptkammer erstreckt

Der vorliegenden Erfindung liegt demgegenüber die Aufgabe zugrunde, einen Füllstromteiler der eingangs genannten Art derart auszugestalten, dass einerseits eine gleichmäßige Befüllung der zu befüllenden Gebinde gewährleistet ist und andererseits eine unerwünschte Veränderung des den Füllstromteiler durchströmenden Füllstoffs weitgehend vermieden wird.

Erfindungsgemäß wird diese Aufgabe durch einen Füllstromteiler gemäß den im Patentanspruch 1 angegebenen Merkmalen gelöst

Gemäß der vorliegenden Erfindung umfasst der Füllstromteiler zum Portionieren von Füllstoffen, die mittels eines Füllstroms zugeführt werden, zumindest zwei in Wirkverbindung miteinander stehende Tellerelemente, die jeweils einen Stator mit einer Hauptkammer, einen Rotor, der in der Hauptkammer und um eine Drehachse relativ zu dem Stator drehbar angeordnet ist, und zumindest zwei Flügelelemente aufweisen, die in radialer Richtung zur Drehachse des Rotors voneinander unabhängig verschiebbar in den Rotor eingesetzt sind und sich mit der Drehung des Rotors in der Hauptkammer des Stators bewegen, und zumindest zwei Verbindungseinrichtungen, die vorgesehen sind zur axialen Verbindung der jeweiligen Rotoren der zumindest zwei Teilerelemente, wobei eine Drehwinkelposition des Rotors und der zugehörigen Flügelelemente eines der Teilerelemente um die Drehachse unterschiedlich Ist zu einer Drehwinkelposition des Rotors und der zugehörigen Flügelelemente des anderen Teilerelements. Dabei kommunizieren die um den vorbestimmten Drehwinkel zueinander versetzten Teilkammern der jeweiligen Teilerelemente miteinander. Auf diese Weise ist gewährleistet, dass die Teilkammern, die mit Füllstoff gefüllt sind und sich in einem Befüllungsprozess befinden, miteinander zumindest teilweise kommunizieren können, so dass ein Druckausgleich zwischen den Hauptkammern und insbesondere zwischen jeweils hinsichtlich ihrer Winkellage korrespondierenden Teilkammern sichergestellt ist.

Bei dem Füllstromteiler zum Portionieren von zugeführten Füllstoffen sind die einzelnen zumindest zwei Teilerelemente benachbart zueinander angeordnet und können daher miteinander kommunizieren. Hinsichtlich der Wickelstellung der an jedem Rotor angeordneten Flügelelemente ist die Drehstellung bzw. die Winkelposition der Flügelelemente relativ zu einem beliebigen aber festen Bezugspunkt bei den zumindest zwei Teilerelementen ungleich. Dies bedeutet, dass bei der Drehung des jeweiligen Rotors in den Teilerelementen jeweils korrespondierende Flügelelemente zu unterschiedlichen Zeiten eine beliebige aber vorbestimmte Position in dem Grundkörper bzw. Stator des Teilerelements einnehmen.

Somit sind die mittels der jeweiligen Flügelelemente der Rotoren gebildeten und mit der Drehung des jeweiligen Rotors dynamisch in Bezug auf Größe und Ort veränderlichen und in der Hauptkammer angeordneten Teilkammer In der Lage, zu unterschiedlichen Zeitpunkten bei einer Drehung der jeweiligen Rotoren den Füllstoff aus dem Zuführungsbereich des Füllstromteilers zu entnehmen und auch zu unterschiedlichen Zeiten an einem Auslassbereich abzugeben. Dies führt zu einer gleichmäßigen Aufnahme und Abgabe des unter Druck zugeführten Füllstoffs durch die Teilerelemente des Füllstromteilers.

Mit dieser Maßnahme wird der Füllstoff erheblich geringer belastet, da durch die Anordnung der Rotoren und der Flügelelemente der Teilerelemente der Füllstoff gleichmäßiger innerhalb des Füllstromteilers angenommen und auch gleichmäßiger zu den einzelnen Fülbereichen abgegeben wird. Mit der größeren Gleichmäßigkeit und dem Vermeiden von Druckspitzen wird die Gefahr vermindert, den Füllstoff sowohl in seiner Struktur als auch in Bezug auf seine Mischung zu verrandern. Ein unvorfeilhaftes Entmischen eines aus mehreren Komponenten bestehenden Füllstoffs wird weitgehend vermieden.

Zudem können die um den vorbestimmten Drehwinkel zueinander versetzten Teilkammem der jeweiligen Tellerelemente miteinander kommunizieren. Auf diese Weise ist gewährleistet, dass die Teilkammem, die mit Füllstoff gefüllt sind und sich in einem Befüllungsprozess befinden, miteinander zumindest teilweise kommunizieren können, so dass ein Druckausgleich zwischen den Hauptkammem und insbesondere zwischen jeweils hinsichtlich ihrer Winkellage korrespondierenden Teilkammern sichergestellt ist.

Die Vermeidung von Druckspitzen und die Verminderung von Unglelchmaßigkeiten bei der Durchströmung des Füllstoffs durch den Füllstromteiler wird somit durch konstruktive Maßnahmen bewirkt, ohne dass weitere Elemente wie Drucksensoren und eine die Ausgangssignale der Drucksensoren verwendende Regelung des Drucks in der Zuführung und in dem Ausgangsbereich in Richtung der Füllbereiche erforderlich ist. Auf einfache Weise kann somit eine verbesserte Gleichmäßigkeit der Durchströmung des Füllstoffs durch den Füllstromteiler und eine weitgehende Schonung des Füllstoffs erreicht werden. Die gleichmäßigere Durchströmung des Füllstoffs durch den Füllstromteiler führt auch zu einer genaueren Portionierung der zur Füllung in angeschlossene Gebinde erforderlichen Füllstoffmenge oder eines Volumens.

Weitere Ausgestaltungen der vorliegenden Erfindungen sind in den Unteransprüchen angegeben.

Bei dem Füllstromteiler kann der Rotor die Hauptkammer jedes Teilerelements teilweise ausfüllen, und es können sich die Flügelelemente in radialer Richtung zur Drehachse bis zu einer Innenwand der Hauptkammer erstrecken. Eine Bewegung und insbesondere Drehung des Rotors in der Hauptkammer des Füllstromteilers ist gewährleistet. Die Flügelelemente könne eine gleitende Bewegung an der Innenwand der Hauptkammer durchführen.

Die Verbindungseinrichtungen des Füllstromteilers können außerhalb der Drehachse angeordnet sein. Hierbei können sich die Verbindungseinrichtungen durch die jeweiligen Rotoren sämtlicher Teilerelemente erstrecken. Auf diese Weise sind die jeweiligen Rotoren der Teilerelemente miteinander starr verbunden und haben somit bei einer Drehung gleiche Drehzahl.

Bei dem Füllstromteiler können die zumindest zwei Flügelelemente des Rotors in gleichen Winkelabständen zueinander radial zur Drehachse angeordnet sein, und ihre relative Lage Innerhalb des Rotors kann dabei von der Drehwinkelposition des Rotors in der Hauptkammer abhängen. Die relative Lage der Flügelelemente wird durch die gleitende Bewegung der Endbereiche der Flügelelemente innerhalb der Hauptkammer geführt und die verschiebbare Lagerung der Flügelelemente in dem jeweiligen Rotor gewährleistet. Die zumindest zwei Flügelelemente können daher in entsprechenden schlitzförmigen Aussparungen des Rotors in radialer Richtung bezüglich der Drehachse unabhängig voneinander verschiebbar angeordnet sein.

Zur Verbindung der jeweiligen Rotoren der Teilerelemente des Füllstromteilers kann jede Verbindungseinrichtung ein stabförmiges Verbindungselement aufweisen, das in entsprechende in den jeweiligen Rotoren angeordnete Öffnungen parallel zur Drehachse eingesetzt ist. Auf diese Welse können alle Rotoren miteinander verbunden werden.

Gemäß einer Ausführungsform des Füllstromteilers können in dem Rotor drei Flügelelemente mit gleichen Winkelabständen zueinander vorgesehen sein, und es können zur Verbindung der zumindest zwei Rotoren drei Verbindungseinrichtungen vorgesehen und die Öffnungen der Verbindungseinrichtungen mit gleichen Winkelabständen zueinander in Rotorsegmenten angeordnet sein, die zwischen den Flügelelementen gebildet werden. Auf diese Weise können die zumindest zwei Rotoren oder eine größere Anzahl von Rotoren sicher miteinander verbunden werden.

Es kann die Position der jeweiligen Öffnungen der Verbindungseinrichtungen für jeden der Rotoren der zumindest zwei Teilerelemente in den zwischen den Flügelelementen gebildeten Rotorsegmenten unterschiedlich sein, so dass die Rotoren miteinander über die Verbindungseinrichtungen starr verbunden sind, jedoch in ihrer relativen Winkellage (Drehposition) zueinander ein vorbestimmter Winkelversatz besteht

Des Weiteren können bei dem Füllstromteiler die jeweiligen Statoren der zumindest zwei Teilerelemente miteinander verbunden sein, sodass die Hauptkammern der jeweiligen benachbarten Teilerelemente miteinander fluchten.

Da bei dem Füllstromteiler die Flügelelemente in Verbindung mit dem Rotor in der Hauptkammer des Stators mit der Drehung des Rotors um die Drehachse dynamisch (hinsichtlich ihrer Größe und ihrer Drehposition bzw. Winkellage) veränderliche Teilkammem bilden. wobei die Teilkammern der zumindest zwei Teilerelemente zueinander um einen vorbestimmten Drehwinkel versetzt sind, wird der gewünschte Druckausgleich zwischen den Teilkammern begünstigt, so dass bei dem Fördern des Füllstoffs und dem Einbringen des Füllstoffs in die zu befüllenden Gebinde eine übermäßige Belastung des Füllstoffs mit der Gefahr einer unerwünschten Veränderung seiner Eigenschaften vermieden wird.

Der Stator des Teilerelements des Füllstromteilers kann einen Einlassbereich und einen Auslassbereich aufweisen, und der von dem Einlassbereich durch die Hauptkammer zu dem Auslassbereich strömende Füllstrom kann die Drehung des Rotors des jeweilige Teilerelements bewirken. Auf diese Welse wird die Drehung des Rotors eines Teilerelements auf den Füllstrom und damit auf eine Füllgesrhwindigkeit abgestimmt, so dass auch durch diese Maßnahme die Gefahr einer Veränderung des Füllstoffs vermindert wird. Es ist ferner eine gleichmäßige Befüllung gewährleistet.

Die vorliegende Erfindung wird nachstehend anhand von Ausführungsbeispielen unter Bezugnahme auf die Figuren beschrieben. Es zeigen:
- Fig. 1: eine teilweise im Schnitt dargestellte Gesamtanordnung eines Füllstromteilers gemäß einem Ausführungsbeispiel der vorliegenden Erfindung,
- Fig. 2: eine Teilschnittansicht des Fülltromteilers gemäß Fig. 1 entlang der Linie A-A,
- Fig. 3A und 3B: eine perspektivische Darstellung von Teilerelementen des Füllstromteilers gemäß Fig. 1,
- Fig. 4A, 4B und 4C: schematische Darstellungen der Anordnung von Öffnungen in einem Rotor der Teilerelemente gemäß den Figuren 3A und 3B,
- Fig. 5: eine Prinzipskizze zur Darstellung der Funktion eines bekannten Füllstromteilers und seiner Komponenten, und
- Fig. 6: eine perspektivische Ansicht von Teilerelementen des bekannten Füllstromteilers von Fig. 5.

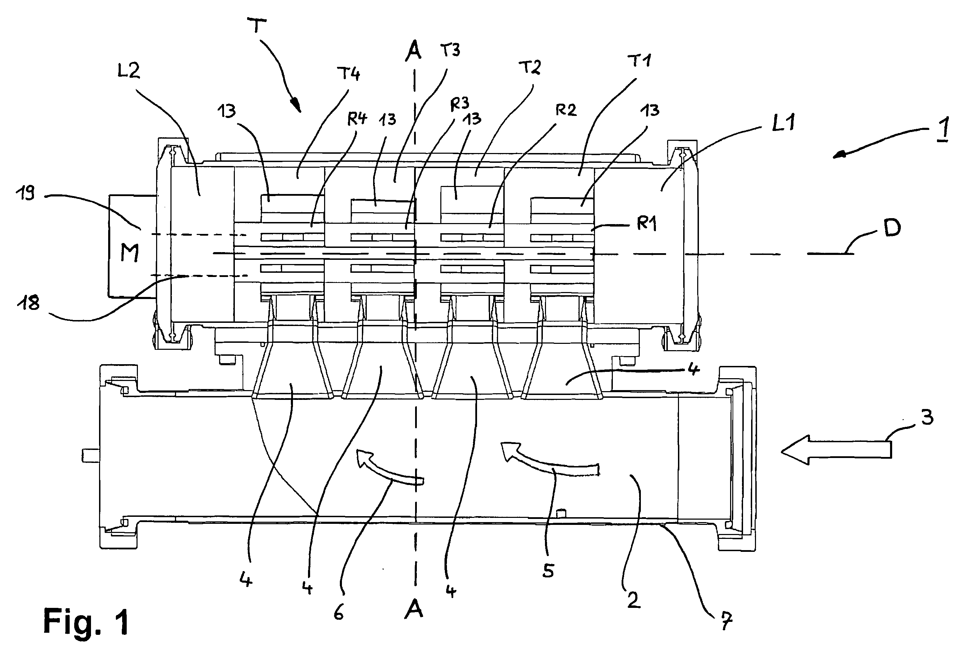

Nachstehend wird unter Bezugnahme auf Figuren 1 bis 3 der Füllstromteiler gemäß der vorliegenden Erfindung im Einzelnen beschrieben.

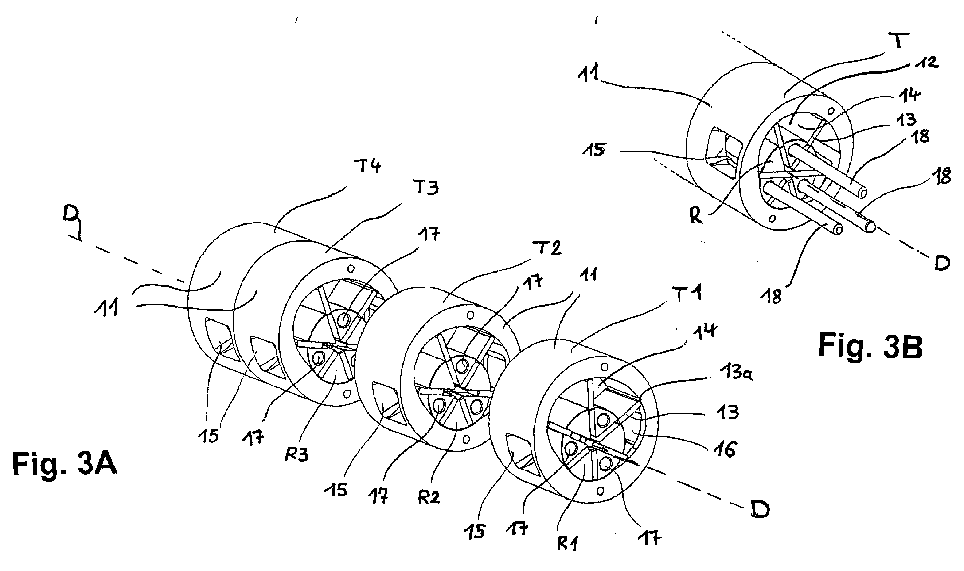

Die Darstellung eines erfindungsgemäßen Füllstromteilers 1 gemäß Fig. 1 in einer Teilschnittansicht zeigt einen Einströmkanal 2, dem entsprechend einer Bezeichnung durch einen Pfeil 3 ein Füllgut oder ein Füllstoff F zugeführt wird. Der Füllstoff F füllt den gesamten Raum des Einströmkanals 2 des Füllstromteilers 1 aus, und strömt in Richtung einer Mehrzahl von Teilerelementen T, wie beispielsweise eines ersten Teilerelements T1, eines zweiten Teilerelements T2, eines dritten Teilerelements T3 und eines vierten Teilerelement T4. Die Darstellung in Fig. 1 zeigt wie Fig. 3 beispielsweise eine Anzahl von vier Teilerelementen T1 bis T4, während gemäß der vorliegenden Erfindung zumindest zwei Teilerelemente T1 und T2 vorgesehen sind.

Insbesondere wird die unter einem vorbestimmten Druck stehende Masse des Füllstoffs F jedem der Vielzahl der Teilerelemente T über einen Zuführungsbereich 4 zugeführt. Vorzugsweise ist für jedes Teilerelement T1 bis T4 ein eigener Zuführungsbereich 4 vorgesehen. Die Erfindung ist jedoch hierauf nicht festgelegt, und es können auch zwei benachbarte Teilerelemente T (beispielsweise die Teilerelemente T1 und T2 oder die Teilerelemente T3 und T4) einen gemeinsamen Zuführungsbereich 4 aufweisen.

Der Füllstoff F wird unter einem vorbestimmten Druck über entsprechende mit dem Füllstromteiler 1 verbundene Rohre gemäß Pfeil 3 zugeführt und strömt in Verbindung mit dem vorbestimmten Druck in den Einströmkanal 2 des Füllstromteilers 1 und von dort gemäß einer Andeutung durch Pfeile 5 und 6 in die jeweiligen Zuführungsbereiche 4 der einzelnen Teilerelemente T. Auf diese Weise wird jedem der Teilerelemente T eine entsprechende Menge des Füllstoffs F zugeführt.

Der Füllstoff F kann hierbei mit einer annähernd gleichen Druckverteilung als ein getakteter oder ein kontinuierlicher Volumenstrom (Füllstrom) einer pastösen Masse zugeführt werden.

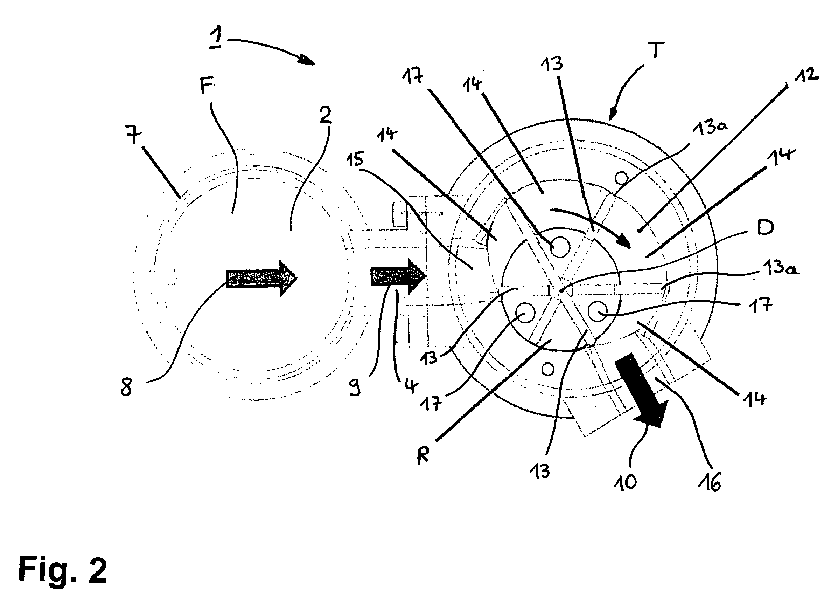

Die Darstellung in Fig. 2 zeigt in Form einer teilweisen Schnittansicht und somit aus einer anderen Betrachtungsrichtung die Strömungswege des Füllstoffs F in dem Füllstromteiler 1 von dem Einströmkanal 2 zu dem Zuführungsbereich 4. Die Pfeile 8 und 9 in Fig. 2 bezeichnen diesen Strömungsweg.

Hierbei kann der Einströmkanal 2 als ein zylindrisches bzw. rohrförmiges Gehäuse ausgebildet sein. An dem Zuführungsbereich 4 ist unmittelbar ein Teilerelement T der zumindest zwei Teilerelemente T1 und T2 oder der Vielzahl der Teilerelemente T1 bis T4 angesetzt. Während Pfeile 8 und 9 die Einströmung des Füllstoffs F in das Teilerelement T bezeichnen, bezeichnet Pfeil 10 die Ausströmung des Füllstoffs F aus dem jeweiligen Teilerelement T in Richtung eines zu befüllenden Gebindes (Füllbereich).

Die Anordnung der Teilerelemente T bzw. T1 bis T4 wird nachstehend in Verbindung mit den Figuren 2 und 3 beschrieben.

Gemäß der Darstellung in den Figuren 2 und 3B weist ein Teilerelement T ein Hauptgehäuse oder einen Stator 11 auf. In dem Stator 11 ist eine Hauptkammer 12 gebildet, die einen unregelmäßigen vom Kreisquerschnitt abweichenden Querschnitt aufweist. In der Hauptkammer 12 ist an einer Seite der Hauptkammer 12 ortsfest ein Rotor R angeordnet, der im Wesentlichen zylindrisch ausgeführt in der Hauptkammer 12 drehbar angeordnet ist. Vorzugsweise befindet sich der Rotor R an einer Seite der Hauptkammer 12, wobei die dem Rotor R unmittelbar benachbarte Teilfläche der inneren Oberfläche (Innenfläche) der Hauptkammer 12 annähernd einen Kreisquerschnitt aufweist, und wobei ferner der Durchmesser des Rotors R kleiner ist als die gesamte Größe der Hauptkammer 12.

Der Stator 11 oder das Hauptgehäuse des Teilerelements T ist somit im Wesentlichen bezüglich seiner äußeren Form ringförmig mit einer vorbestimmten Tiefe in einer axialen Richtung einer Drehachse D des Rotors R ausgebildet, wobei der Rotor R teilweise in Verbindung mit einem entsprechenden Abstand zur Innenwand der Hauptkammer 12 von dem Stator 11 vollständig umschlossen ist.

Der Rotor R mit der im Wesentlichen zylindrischen Form umfasst zumindest zwei in radialer Richtung verlaufende schlitzförmige Aussparungen, in welche Flügelelemente 13 eingesetzte sind. Die Flügelelemente 13 verlaufen somit in radialer Richtung in dem Rotor R relativ zu der Drehachse D des Rotors R. Die Flügelelemente 13 sind in dem Rotor R beweglich und insbesondere verschiebbar in der jeweiligen schlitzförmigen Aussparung des Rotors R eingesetzt und liegen mit Endbereichen 13a an der inneren Wand der Hauptkammer 12 des Stators 11 gleitend an.

Wird der Rotor R in eine Drehung versetzt, wobei sich der Rotor R um die ortsfeste Drehachse D dreht, dann gleiten die Endbereiche 13a der Flügelelemente 13 derart an der inneren Oberfläche des Stators 11 und damit im Begrenzungsbereich der Hauptkammer 12, dass die Endbereiche 13a der Flügelelemente 13 immer durch die innere Wand des Stators 11 geführt werden. Dies wird durch die verschiebbare Lagerung der Flügelelemente 13 in dem Rotor R gewährleistet.

Es sind für jeden Rotor R der Teilerelemente T1 bis T4 zumindest zwei Flügelelemente 13 und vorzugsweise drei oder mehr Flügelelemente 13 vorgesehen, wobei in entsprechender Weise eine zugehörige Anzahl von schlitzförmigen Aussparungen im Rotor R vorgesehen ist, und sämtliche Flügelelemente 13 in radialer Richtung in dem Rotor R relativ zu der Drehachse D verschiebbar eingesetzt sind. Bei der Drehung des Rotors verschieben sich die Flügelelemente 13 ebenfalls in den radialen schlitzförmigen Aussparungen und damit in radialer Richtung relativ zur Drehachse D.

Mit der Drehung des Rotors R im Uhrzeigersimm ist es beispielsweise gemäß Fig. 2 erkennbar, dass sich ebenfalls die Flügelelemente 13 in der Hauptkammer 12 des Stators 11 bewegen, wobei die Endbereiche 13a der Flügelelemente 13 auf der inneren Wand (Innenwand) des Stators 11 und somit auf der Begrenzungswand der Hauptkammer 12 gleiten.

Mit der Drehung des Rotors R um die relativ zu der Hauptkammer 12 und dem Stator 11 ortsfesten Drehachse D werden in dem verbleibenden Raum der Hauptkammer 12, der nicht von dem Rotor R eingenommen wird, mittels der sich mit dem Rotor R bewegenden Flügelelemente 13 einzelne Teilkammern 14 gebildet, die sich in Abhängigkeit von der Drehung des Rotors R sowohl hinsichtlich ihrer Größe als auch hinsichtlich ihres Orts, d.h. ihrer relativen Winkelposition zu einem beliebigen Bezugspunkt innerhalb des Stators 11 verändern. Die Teilkammern 14 als ein Teil des Raums der Hauptkammer 12 sind somit dynamisch in Verbindung mit der Drehung in Form und Größe veränderlich, und ihre Form und Größe ist ebenfalls dynamisch relativ zu einer Drehwinkelposition (Winkellage) veränderlich.

Gemäß der Darstellung in Figur 2 wird der Füllstoff F in einer Strömung (Füllstrom) gemäß dem vierten und fünften Pfeil 8 und 9 über den Zuführungsbereich 4 sowie einen in dem Stator 11 angeordneten Einlassbereich 15 als Fortsetzung des Zuführungsbereichs 4 der Hauptkammer 12 zugeführt. Der mit dem vorbestimmten Druck einströmende Füllstoff F trifft auf die in den Rotor R eingesetzten Flügelelemente 13 und bewegt somit den Rotor R einschließlich der Flügelelemente 13 in einer Drehrichtung, die in der Darstellung von Figur 2 dem Uhrzeigersinn entspricht. Der Füllstoff F füllt im Wesentlichen die Teilkammern 14, wodurch mit der Bewegung des Rotors R und der Flügelelemente 13 eine Teilkammer 14 mit veränderlicher Größe und damit veränderlichem Volumen im Uhrzeigersinn bewegt wird. Der in einer jeweiligen Teilkammer 14 befindliche Anteil des Füllstoffs F wird über einen Auslassbereich 16 ausgegeben. Der über den Auslassbereich 16 ausgegebene Füllstoff F gelangt zu dem daran angeordneten und in den Figuren nicht angezeigten zufüllenden Gebinde oder einer weiteren rohrförmigen Einrichtung.

Der an den jeweiligen Auslassbereichen 16 der Teilerelemente T ausgegebene Anteil des Füllstoffs F, der den zufüllenden Gebinden zugeführt wird, wurde somit über den Einströmkanal 2, die Zuführungsbereiche 4 und die Hauptkammern 12 bzw. die Vielzahl der Teilkammern 14 einerseits verteilt und andererseits portioniert.

Gemäß der Darstellung in Figur 1 sind beispielsweise bei dem Füllstromteiler 1 zumindest zwei Teilerelemente und vorzugsweise vier Teilerelemente T1 bis T4 angegeben. Jedes der Teilerelemente T1 bis T4 ist gemäß der vorstehenden Beschreibung aufgebaut.

Figur 3A zeigt in einer perspektivischen Darstellung die Anordnung einer Mehrzahl von Teilerelementen T (das erste bis vierte Teilerelement T1 bis T4), wobei die Teilerelemente T mit ihrem jeweiligen Stator 11 miteinander verbunden sind, so dass die jeweiligen Hauptkammern 12 durch jeden Stator 11 zueinander fluchtend angeordnet sind und einen länglichen Hohlraum bildet. Jedes Teilerelement T1 bis T4 umfasst auf einer seiner Seiten (d. h. bei dem Zuführungsbereich 4) den jeweiligen Einlassbereich 15 und auf der anderen Seite den jeweiligen Auslassbereich 16, wie es in Figur 2 gezeigt ist.

Gemäß der Darstellung in Figur 3A sind das erste und zweite Teilerelement T1 und T2 zur verbesserten perspektivischen Darstellung getrennt von dem dritten und vierten Teilerelement T3 und T4 gezeigt.

Die jeweiligen Rotoren R bzw. R1 bis R4 sind in gleicher Weise aufgebaut und umfassen die Mehrzahl der Flügelelemente 13, die in schlitzförmige radiale Aussparungen eingesetzt sind.

Gemäß der Darstellung in den Figuren 3A und 3B weisen die jeweiligen Rotoren Öffnungen 17 auf, die in ähnlicher Weise in jedem Rotor in den Rotorbereichen oder Segmenten zwischen den Flügelelementen 13 ausgebildet sind und in axialer Richtung des Rotors, d.h. in Richtung der Drehachse D verlaufen.

In die Öffnungen 17 sind gemäß der Darstellung in Figur 3B vorzugsweise stabförmige Wellenteile 18 eingesetzt, wobei die Wellenteile 18 in die Öffnungen 17 sämtlicher Rotoren R1 bis R4 eingesetzt sind, so dass sämtliche Rotoren R1 bis R4 miteinander drehfest verbunden sind. Sämtliche Rotoren R1 bis R4 drehen sich daher synchron mit der gleichen Drehzahl um die Drehachse D, wobei insbesondere im Bereich der Drehachse D keine physikalische Welle angeordnet ist.

Die Öffnungen 17 in den jeweiligen Rotoren R1 bis R4 der Teilerelemente T zum Aufnehmen der Wellenteile 18 sind in den Bereichen des Rotors R zwischen den Flügelelementen 13 angeordnet. Die Öffnungen 17 und die Wellenteile 18 bilden Verbindungseinrichtungen zwischen der Vielzahl der Rotoren R1 bis R4. Die Verbindungseinrichtungen, deren Wellenteile 18 in Figur 3A zur Vereinfachung der Darstellung nicht gezeigt sind, bilden somit eine starre Verbindung zwischen den einzelnen (zumindest zwei) Rotoren R, und es wird die Bewegung bzw. Drehung sämtlicher Rotoren R synchronisiert. Die Öffnungen 17 sind in den jeweiligen Rotorteilen zwischen den Flügelelementen 13 derart angeordnet, dass bei dem Einsetzen der Wellenteile 18 in die Öffnungen 17 der jeweiligen Rotoren jeder der Rotoren R1 bis R4 zu einem anderen der Rotoren R1 bis R4 eine unterschiedliche Drehposition (Winkelposition) relativ zu einer beliebigen aber festen Drehwinkelposition (als Bezugsgröße) aufweist.

Dies bedeutet, dass die Drehwinkelposition der Flügelelemente 13 eines Rotors (und damit auch des Rotors R selbst) unterschiedlich ist zur Drehwinkelposition vergleichbarer bzw. entsprechender Flügelelemente 13 eines anderen Rotors R der Rotoren R1 bis R4. In Figur 3A ist dies dargestellt, indem die Drehwinkelposition des Rotors R1 des ersten Teilerelements T1 weiter im Uhrzeigersinn gedreht ist als die Drehwinkelposition des Rotors R2 des zweiten Teilerelements T2. In diesem Zusammenhang ist ebenfalls in Figur 1 im oberen Teil bezüglich der Teilerelemente T1 bis T4 in der Schnittdarstellung angegeben, dass die Flügelelemente 13 eine verschiedene Position hinsichtlich ihres Drehwinkels aufweisen.

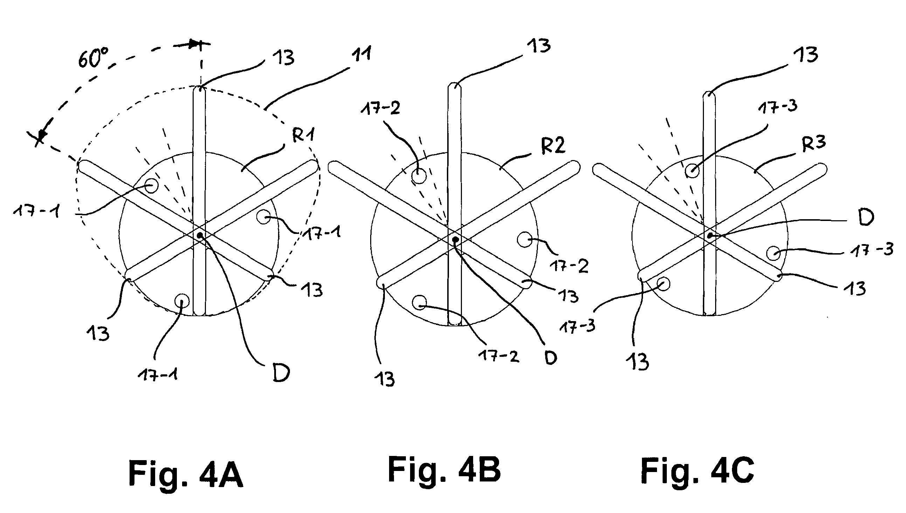

Bei den jeweiligen Rotoren R1 bis R4 der Teilerelemente T1 bis T4 sind die jeweiligen Öffnungen 17 in dem Bereich des Rotors R zwischen den Flügelelementen 13 von Rotor zu Rotor jeweils innerhalb eines Segments zwischen den Flügelelementen 13 an verschiedenen Stellen angeordnet, wobei der gewünschte Winkelversatz gebildet wird, wenn die als Verbindungseinrichtungen dienenden Wellenteile 18 in die jeweiligen Öffnungen 17 eingesetzt werden. Eine derartige Situation ist in den Figuren 4A bis 4C gezeigt, wobei in dieser Ausführung beispielsweise eine Anordnung mit einer Anzahl von drei Teilerelementen T und damit drei Rotoren R vorgesehen ist.

Gemäß Figur 4A ist in einem Segment, beispielsweise in dem in Figur 4A dargestellten Segment links oben des ersten Rotors R1 die Öffnung 17-1 angeordnet. In dem durch die in den Rotor R1 eingesetzten Flügelelemente 13 definierten Rotorsegment befindet sich beispielsweise die Öffnung 17-1 in einem vorbestimmten ersten Winkelbereich dieses Segments. Der Winkelbereich des Segments beträgt beispielsweise in Verbindung mit drei in den Rotor R1 eingesetzten Flügelelementen 13 gemäß der Darstellung in Figur 4A 60°. Die Öffnung 17-1 kann somit beispielsweise in einem ersten Teil-Winkelbereich von 20° des betreffenden Segments angeordnet sein.

Die weiteren entsprechenden Öffnungen 17-1 in den anderen jeweiligen Segmenten (im vorliegenden Fall mit einem Winkelbereich von 60°) des ersten Rotors R1 sind an einer entsprechenden Stelle angeordnet. Somit sind vorzugsweise zwischen den Öffnungen 17 in dem Rotor R, und speziell in Bezug auf die Figur 4A zwischen den Öffnungen 17-1 gleiche Winkelabstände vorgesehen, die in der in Figur 4A gezeigten Anordnung 120° betragen.

Gemäß der Darstellung in Figur 4B ist in dem korrespondierenden Segment des zweiten Rotors R2 die entsprechende Öffnung 17-2 bezüglich der Anordnung von Figur 4A versetzt, und es befinden sich die jeweils entsprechenden Öffnungen 17-2 in einem zweiten Teil-Winkelbereich von etwa 20° in dem jeweiligen betreffenden Segment des Rotors R2 zwischen den Flügelelementen 13.

In analoger Weise ist gemäß Figur 4C beispielhaft der dritte Rotor R3 gezeigt, bei dem innerhalb der entsprechenden Segmente zwischen den Flügelelementen 13 des Rotors R3 die Öffnungen 17-3 in einem dritten Teil-Winkelbereich dieses Segments und damit im Wesentlichen benachbart zu dem nächsten Flügelelement 13 angeordnet sind.

Wie es aus den Figuren 4A bis 4C erkennbar ist, sind bei dem Verbinden beispielsweise der drei Rotoren R1 bis R3 die Flügelelemente des ersten Rotors R1 voreilend bezüglich der Winkelposition der Flügelelemente des Rotors R2, und es sind die Flügelelemente 13 des dritten Rotors R3 relativ zu den Flügelelementen 13 und damit der Drehposition der Rotoren R1 und R2 nacheilend. In jedem Fall werden gemäß der vorstehenden Beschreibung die drei Rotoren R1 und R3 mittels der vorzugsweise stabförmigen Wellenteile 18 fest miteinander verbunden, so dass sich die jeweiligen Rotoren nicht gegeneinander verdrehen können.

Die Darstellung der Figuren 4A bis 4C zeigt als Beispiel eine Ausführungsform mit drei Rotoren R1 bis R3, wenn drei Teilerelemente T in dem Füllstromteiler 1 vorgesehen sind, wobei ein gleichmäßiger Winkelversatz erreicht werden kann durch eine Anordnung der Öffnungen 17-1, 17-2 und 17-3 jeweils in einem vorbestimmten aber unterschiedlichen Teil-Winkelbereich innerhalb des durch die Flügelelemente 13 in dem Rotor R definierten Rotorsegments.

Sind dem gegenüber beispielsweise vier Teilerelemente T vorgesehen, und sind somit vier Rotoren R1 bis R4 miteinander zu verbinden, dann kann zum Erreichen einer gleichmäßigen Winkelabstufung bzw. eines gleichmäßigen Winkelversatzes zwischen den einzelnen Rotoren eine feinere Winkelabstufung mit Winkelbereichen von etwa 15° innerhalb des durch die Flügelelemente 13 in den jeweiligen Rotoren R1 bis R4 definierten Segments vorgesehen sein.

Die vorstehend beschriebene Ausführungsform mit vier Teilerelementen T1 bis T4 und damit vier Rotoren R1 bis R4 findet beispielsweise bei der Anordnung der Teilerelemente T gemäß Figur 3A Anwendung.

Die vorstehende Beschreibung der um vorbestimmte Winkel versetzten Öffnungen 17 in den verschiedenen Rotoren betraf eine derartige Anordnung bzw. Positionierung der jeweiligen Öffnungen 17 in den Rotoren R, dass die verschiedenen Rotoren R zueinander um jeweils einen gleichen Winkel versetzt sind. Die Erfindung ist hierauf jedoch nicht festgelegt, da die durch die vorliegende Erfindung bereitgestellten Vorteile in gleicher Weise erreicht werden, wenn innerhalb einer Vielzahl von Teilerelementen T und damit einer gleichen Vielzahl von Rotoren R gleichartige oder unterschiedliche oder teilweise gleichartige und unterschiedliche Winkelversetzungen oder Winkelabstände zwischen den Rotoren R gebildet werden. In jedem Fall sind durch entsprechendes versetztes Anordnen der jeweiligen Öffnungen 17 in den jeweiligen Rotoren R unterschiedliche Versetzungswinkel möglich.

Eine gleichartige Anordnung ist ebenfalls erreichbar, wenn zwei Teilerelemente T und damit zwei Rotoren R vorgesehen und miteinander verbunden sind. Ein bevorzugter Winkelversatz beträgt in diesem Fall etwa 30°, wenn eine Anzahl von drei Flügelelementen 13 vorgesehen ist.

Die vorstehend angegebenen Darstellungen beziehen sich darauf, dass die Rotoren R der Teilerelemente T um die relativ zu den Teilerelementen T ortsfest angeordnete Drehachse D drehbar sind, während die Drehachse D als Welle nicht ausgeführt ist. Vielmehr werden die Rotoren R der einzelnen Teilerelemente T mittels der Verbindungseinrichtungen (d. h. den Wellenteilen 18 und den Öffnungen 17 in den Rotoren) verbunden. Die Wellenteile 18 und die zugehörigen Öffnungen 17 liegen nicht im Bereich der Drehachse D, sondern sind zur Drehachse D um ein vorbestimmtes Maß beabstandet, das von der Größe des Rotors R und insbesondere von dessen Durchmesser abhängig ist.

Die Wellenteile 18 können hierbei geradlinig und somit parallel zur Drehachse D durch sämtliche Rotoren R verlaufen. Die Erfindung ist hierauf jedoch nicht festgelegt, und es kann zumindest ein Rotor R einer Vielzahl von Rotoren R derart ausgeführt sein, dass die Öffnungen 17 nicht in axialer Richtung durch den gesamten Rotor R in seiner axialen Ausdehnung verlaufen, sondern lediglich eine vorbestimmte Öffnungstiefe innerhalb eines Rotors R aufweisen, so dass auf einer Seite des Rotors R Öffnungen 17 an einer vorbestimmten Stelle innerhalb der jeweiligen Segmente des Rotors R angeordnet sind, während auf der anderen Seite des Rotors R die entsprechenden Öffnungen 17 mit einer anderen Winkelposition innerhalb des Segments angeordnet sind, so dass weitere Abstufungen eines Winkelversatzes zwischen den Rotoren R einer Vielzahl von Teilerelementen und damit Rotoren möglich ist. In diesem Rotor R sind die Öffnungen 17 dann nicht in axialer Länge durchgehend.

Die Lagerung der Rotoren R kann einerseits durch ein gleitendes Anliegen in einem vorbestimmten Bereich innerhalb der Hauptkammer 12 des Stators 11 erfolgen, und/oder zum anderen über die als Verbindungseinrichtungen dienenden Wellenteile 18 und Öffnungen 17, wobei vorzugsweise gemäß der Darstellung in Figur 1 Lagerbereiche L1 und L2 vorgesehen sind, in denen (nicht im einzelnen in den Figuren gezeigte) Lagerelemente angeordnet sind und in Wirkverbindung mit den durch die einzelnen Rotoren R verlaufenden Wellenteilen 18 stehen.

Gemäß der vorstehenden Beschreibung werden die mittels der Wellenteile 18 verbundenen Rotoren R passiv drehbar gelagert und mittels des entsprechend einem vorbestimmten Druck in die Hauptkammer 12 jedes Teilerelements T einströmende Füllstoffs F bewegt. Die Erfindung ist hierauf jedoch nicht festgelegt, und es besteht des Weiteren die Möglichkeit, einen gesteuerten Antrieb M, beispielsweise in Verbindung mit einem Elektromotor oder dergleichen vorzusehen, der in einem Antriebsblock 19 (siehe Figur 1) angeordnet ist. In Abhängigkeit von der Viskosität oder Zähflüssigkeit des Füllstoffs F kann es erforderlich sein, die Rotoren R der Teilerelemente T gezielt und geregelt anzutreiben. Dies kann mit einer Erfassung der Drehzahl oder auch des Drehwinkels der Rotoren R der Teilerelemente T verbunden werden, da dies ein Maß für die Dosiermenge und/oder Strömungsgeschwindigkeit des Massenstroms des Füllstoffs F ist.

Bei der Anordnung der Einlassbereiche 15 und der Auslassbereiche 16 als entsprechende Zufluss-und Abflussöffnungen zur Einströmung und Ausströmung des Füllstoffs F ist eine derartige Anordnung und eine Ausdehnung der beiden Bereiche 15 und 16 vorgesehen, die in Richtung der Drehachse D kleiner ist als die Ausdehnung des Stators 11 in der Richtung der Drehachse D. Auf diese Weise ist gewährleistet, dass die jeweiligen Endbereiche 13a der Flügelelemente 13 beim Drehen des Rotors R stets an zumindest einem Teil der Innenfläche des Stators 11 gleitend anliegen, so dass eine gleitende radiale Verschiebung der einzelnen Flügelelemente 13 innerhalb des Rotors R nur in dem Umfang erfolgt, wie sie bei der Drehung des Rotors R innerhalb der Hauptkammer 12 des Stators 11 möglich ist. Die Flügelelemente 13 weisen somit eine Länge in radialer Richtung relativ zur Drehachse D auf, so dass sie bei der Drehung des Rotors R durch das gleitende Anliegen an der Innenwand des Stators 11 geführt werden. Weitere Bauteile wie Federn zum Führen der Flügelelemente 13 sind nicht erforderlich.

Durch konstruktive Maßnahmen kann somit das Auftreten von Druckschwankungen und insbesondere von Druckspitzen vermieden oder zumindest erheblich vermindert werden, so dass einerseits eine sehr gleichmäßige Strömung des Füllstoffs innerhalb des Füllstromteilers 1 und auch in Richtung der zu befüllenden Gebinde gewährleistet ist, und andererseits durch die gleichmäßige Strömung die Gefahr verringert ist, dass der Füllstoff F verändert und in seiner Konsistenz zerstört oder entmischt wird. Mit einer Vermeidung oder zumindest einer Verringerung der Druckschwankungen werden auch Schwankungen der Portioniergenauigkeit erheblich vermindert

Der Abbau der Druckspitzen steht im Wesentlichen im Zusammenhang mit der jeweils zueinander um einen vorbestimmten Winkel versetzten Rotoren R innerhalb des jeweiligen Teilerelements T, und wird ebenfalls begünstigt durch die unmittelbarer Aneinanderreihung der jeweiligen Teilerelemente T, und insbesondere der jeweiligen Statoren 11 der Teilerelemente T, so dass durch sämtliche Teilerelemente T einerseits die Hauptkammer 12 jedes Teilerelements T und andererseits eine in axialer Richtung sich erstreckende kontinuierliche Öffnung, bestehend aus sämtlichen Hauptkammern 12 der miteinander verbundenen Teilerelemente T, gebildet wird. Mit der Möglichkeit, dass die Hauptkammern 12 der Teilerelemente T miteinander kommunizieren können, und der Möglichkeit einer Kommunikation auch zwischen den zueinander um einen vorbestimmten Winkel versetzten Teilkammern 14 der jeweiligen Rotoren R können Druckunterschiede sowohl hinsichtlich eines niedrigeren als auch hinsichtlich eines höheren Drucks auf einfache Weise durch diese konstruktive Anordnung vermindert werden. Ein Druckausgleich zwischen den Teilerelementen T ist ohne weitere Maßnahmen in konstruktiver und regelungstechnischer Hinsicht gewährleistet. Insbesondere werden Druckspitzen bei bereits im Füllprozess befindlichen Teilkammern 14 gedämpft, wobei das Portionierergebnis erheblich verbessert wird.

Auf Drucksensoren an verschiedenen Stellen innerhalb des Füllstromteilers 1 zur Regelung der Portioniergenauigkeit und der Gleichmäßigkeit der Strömung des Füllstoffs F kann somit verzichtet werden.

Die vorliegende Erfindung wurde vorstehend anhand von Ausführungsbeispielen unter Bezugnahme auf die zugehörigen Figuren beschrieben.

Für den auf diesem Gebiet tägigen Fachmann ist es jedoch selbstverständlich, dass die Ausgestaltung der vorliegenden Erfindung gemäß den vorstehend beschriebenen Figuren und die für die jeweiligen Bauteile und Komponenten verwendeten Bezugszeichen sowie die beispielhaften Angaben nicht einschränkend auszulegen sind. Auch sind die in den einzelnen Figuren angegebenen Proportionen und Größenverhältnisse für ein besseres Verständnis lediglich schematisch und vereinfach dargestellt. Die Erfindung ist auf die angegebenen Darstellungen nicht beschränkt. Vielmehr werden als zur Erfindung gehörig sämtliche Ausführungsformen und Varianten angesehen, die unter die beigefügten Patentansprüche fallen.

## Patentansprüche

1. Füllstromteiler zum Portionieren eines dem Füllstromteilers (1) mittels eines Füllstroms zugeführten Füllstoffs, mit:
zumindest zwei in Wirkverbindung miteinander stehenden Teilerelementen (T), die einen Stator (11) mit einer Hauptkammer (12), einen Rotor (R), der in der Hauptkammer (12) und um eine Drehachse (D) relativ zu dem Stator drehbar angeordnet ist, und zumindest zwei Flügelelemente (13) aufweisen, die in radialer Richtung zur Drehachse (D) des Rotors (R) voneinander unabhängig verschiebbar in den Rotor (R) eingesetzt sind und sich mit der Drehung des Rotors in der Hauptkammer (12) des Stators (11) bewegen, und
zumindest zwei Verbindungseinrichtungen, die vorgesehen sind zur axialen Verbindung der jeweiligen Rotoren (R) der zumindest zwei Teilerelemente (T),
**dadurch gekennzeichnet, dass** eine Drehwinkelposition des Rotors (R) und der zugehörigen Flügelelemente (13) eines der Teilerelemente (T) um die Drehachse (D) unterschiedlich ist zu einer Drehwinkelposition des Rotors (R) und der zugehörigen Flügelelemente (13) des anderen Teilerelements (T),
wobei die Flügelelemente (13) in Verbindung mit dem Rotor (R, R1 bis R4) in der Hauptkammer (12) des Stators (11) mit der Drehung des Rotors (R) um die Drehachse (D) dynamisch veränderliche Teilkammern (14) bilden, und wobei die Teilkammern (14) der zumindest zwei Teilerelemente (T) zueinander um einen vorbestimmten Drehwinkel versetzt sind, und
wobei die zumindest zwei Teilerelemente (T) benachbart zueinander angeordnet sind, so dass die um den vorbestimmten Drehwinkel zueinander versetzten Teilkammern (14) der jeweiligen Teilerelemente (T) miteinander kommunizieren.

2. Füllstromteiler nach Anspruch 1, wobei der Rotor (R) die Hauptkammer (12) jedes Teilerelements (T) teilweise ausfüllt und sich die Flügelelemente (13) in radialer Richtung zur Drehachse (D) bis zu einer Innenwand der Hauptkammer erstrecken.

3. Füllstromteiler nach Anspruch 1, wobei die Verbindungseinrichtungen außerhalb der Drehachse (D) angeordnet sind.

4. Füllstromteiler nach einem der Ansprüche 1 bis 3, wobei sich die Verbindungseinrichtung(en) durch die jeweiligen Rotoren (R) sämtlicher Teilerelemente (T) erstrecken/erstreckt.

5. Füllstromteiler nach einem der Ansprüche 1 bis 4, wobei die zumindest zwei Flügelelemente des Rotors (R) in gleichen Winkelabständen zueinander radial zur Drehachse (D) angeordnet sind, und ihre relative Lage innerhalb des Rotors (R) von der Drehwinkelposition des Rotors in der Hauptkammer (12) abhängig ist.

6. Füllstromteiler nach Anspruch 5, wobei die zumindest zwei Flügelelemente (13) in entsprechenden schlitzförmigen Aussparungen des Rotors (R) in radialer Richtung bezüglich der Drehachse (D) unabhängig voneinander verschiebbar angeordnet sind.

7. Füllstromteiler nach Anspruch 4, wobei jede Verbindungseinrichtung ein stabförmiges Verbindungselement (18) aufweist, das in entsprechende in den jeweiligen Rotoren (R) angeordnete Öffnungen (17) parallel zur Drehachse (D) eingesetzt ist.

8. Füllstromteiler nach Anspruch 7, wobei in dem Rotor (R) drei Flügelelemente (13) mit gleichen Winkelabständen zueinander vorgesehen sind und zur Verbindung der zumindest zwei Rotoren (R, R1, R2), drei Verbindungseinrichtungen vorgesehen sind und die Öffnungen (17) der Verbindungseinrichtungen mit gleichen Winkelabständen zueinander in Rotorsegmenten angeordnet sind, die zwischen den Flügelelementen (13) gebildet werden.

9. Füllstromteiler nach Anspruch 8, wobei die Position der jeweiligen Öffnungen (17) der Verbindungseinrichtungen für jeden der Rotoren (R, R1 bis R4) der zumindest zwei Teilerelemente (T) in den zwischen den Flügelelementen (13) gebildeten Rotorsegmenten unterschiedlich ist.

10. Füllstromteiler nach einem der Ansprüche 1 bis 9, wobei die jeweiligen Statoren (11) der zumindest zwei Teilerelemente (T) miteinander verbunden sind, sodass die Hauptkammern (12) der jeweiligen benachbarten Teilerelemente (T) miteinander fluchten.

11. Füllstromteiler nach Anspruch 1, wobei der Stator (11) einen Einlassbereich (15) und einen Auslassbereich (16) aufweist, und wobei der von dem Einlassbereich (15) durch die Hauptkammer (12) zu dem Auslassbereich (16) strömende Füllstrom die Drehung des Rotors (R) des jeweiligen Teilerelements (T) bewirkt.

## Claims

1. A filling flow divider for portioning a filling substance fed to the filling flow divider (1) by means of a filling flow comprising:
at least two divider elements (T) which are operatively connected together and which have a stator (11) having a main chamber (12), a rotor (R) arranged in the main chamber rotatably relative to the stator about an axis of rotation (D), and at least two blade elements (13) which are fitted into the rotor displaceably independently of each other in the radial direction relative to the axis of rotation of the rotor and move with the rotation of the rotor in the main chamber (12) of the stator (11), and
at least two connecting devices provided for axially connecting the respective rotors (R) of the at least two divider elements (T),
**characterised in that** a rotary angle position of the rotor (R) and the associated blade elements (13) of one of the divider elements (T) about the axis of rotation (D) is different in relation to a rotary angle position of the rotor (R) and the associated blade elements (13) of the other divider element (T),
wherein the blade elements (13) in conjunction with the rotor (R, R1 to R4) form in the main chamber (12) of the stator (11) subchambers (14) which are dynamically variable with the rotation of the rotor (R) about the axis of rotation (D) and wherein the subchambers (14) of the at least two divider elements (T) are displaced relative to each other through a predetermined rotary angle, and
wherein the at least two divider elements (T) are arranged adjacent to each other so that the subchambers (14) of the respective divider elements (T), that are displaced relative to each other through the predetermined rotary angle, communicate with each other.

2. A filling flow divider according to claim 1 wherein the rotor (R) partially fills the main chamber (12) of each divider element (T) and the blade elements (13) extend in a radial direction relative to the axis of rotation (D) to an inside wall of the main chamber.

3. A filling flow divider according to claim 1 wherein the connecting devices are arranged outside the axis of rotation (D).

4. A filling flow divider according to one of claims 1 to 3 wherein the connecting device or devices extends or extend through the respective rotors (R) of all divider elements (T).

5. A filling flow divider according to one of claims 1 to 4 wherein the at least two blade elements of the rotor (R) are arranged at equal angular spacings relative to each other radially in relation to the axis of rotation (D) and their relative position within the rotor (R) is dependent on the rotary angle position of the rotor in the main chamber (12).

6. A filling flow divider according to claim 5 wherein the at least two blade elements (13) are arranged in corresponding slot-shaped apertures in the rotor (R) displaceably independently of each other in the radial direction with respect to the axis of rotation (D).

7. A filling flow divider according to claim 4 wherein each connecting device has a bar-shaped connecting element (18) which is fitted in corresponding openings (17) arranged in the respective rotors (R) parallel to the axis of rotation (D).

8. A filling flow divider according to claim 7 wherein provided in the rotor (R) are three blade elements (13) at equal angular spacings relative to each other and there are provided three connecting devices for connecting the at least two rotors (R, R1, R2) and the openings (17) of the connecting devices are arranged at equal angular spacings relative to each other in rotor segments which are formed between the blade elements (13).

9. A filling flow divider according to claim 8 wherein the position of the respective openings (17) of the connecting devices is different for each of the rotors (R, R1 to R4) of the at least two divider elements (T) in the rotor segments formed between the blade elements (13).

10. A filling flow divider according to one of claims 1 to 9 wherein the respective stators (11) of the at least two divider elements (T) are connected together so that the main chambers (12) of the respective adjacent divider elements (T) are aligned with each other.

11. A filling flow divider according to claim 1 wherein the stator (1) has an inlet region (15) and an outlet region (16) and wherein the filling flow flowing from the inlet region (15) through the main chamber (12) to the outlet region (16) causes rotation of the rotor (R) of the respective divider element (T).

## Revendications

1. Séparateur de flux de remplissage servant à diviser en portions une matière de charge amenée au séparateur de flux de remplissage (1) au moyen d'un flux de remplissage, comprenant :
au moins deux éléments séparateurs (T) se trouvant en liaison active les uns avec les autres, lesquels présentent un stator (11) pourvu d'une chambre principale (12), un rotor (R), qui est disposé dans la chambre principale (12) et de manière à pouvoir tourner par rapport au stator autour d'un axe de rotation (D), et au moins deux éléments formant des ailettes (13), qui sont insérés dans le rotor (R) de manière à pouvoir être mis en coulissement indépendamment les uns des autres dans la direction radiale par rapport à l'axe de rotation (D) du rotor (R) et qui se déplacent avec la rotation du rotor dans la chambre principale (12) du stator (11), et
au moins deux dispositifs de liaison, qui sont prévus afin de relier de manière axiale les rotors (R) respectifs des deux éléments séparateurs (T) ou plus,
**caractérisé en ce qu'**une position angulaire de rotation du rotor (R) et des éléments formant des ailettes (13) associés d'un des éléments séparateurs (T) autour de l'axe de rotation (D) est différente par rapport à une position angulaire de rotation du rotor (R) et des éléments formant des ailettes (13) associés de l'autre élément séparateur (T),
dans lequel les éléments formant des ailettes (13) se trouvant en liaison avec le rotor (R, R1 à R4) forment, dans la chambre principale (12) du stator (11), des chambres séparatrices (14) variant de manière dynamique avec la rotation du rotor (R) autour de l'axe de rotation (D), et dans lequel les chambres séparatrices (14) des deux éléments séparateurs (T) ou plus sont décalées les unes par rapport aux autres selon un angle de rotation prédéterminé, et
dans lequel les deux éléments séparateurs (T) ou plus sont disposés de manière adjacente les uns par rapport aux autres si bien que les chambres séparatrices (14), décalées les unes par rapport aux autres selon l'angle de rotation prédéterminé, des éléments séparateurs (T) respectifs communiquent entre elles.

2. Séparateur de flux de remplissage selon la revendication 1, dans lequel le rotor (R) remplit en partie la chambre principale (12) de chaque élément séparateur (T) et les éléments formant des ailettes (13) s'étendent dans une direction radiale par rapport à l'axe de rotation (D) jusqu'à une paroi intérieure de la chambre principale.

3. Séparateur de flux de remplissage selon la revendication 1, dans lequel les dispositifs de liaison sont disposés en dehors de l'axe de rotation (D).

4. Séparateur de flux de remplissage selon l'une quelconque des revendications 1 à 3, dans lequel le/les dispositif(s) de liaison s'étend/s'étendent à travers les rotors (R) respectifs de tous les éléments séparateurs (T).

5. Séparateur de flux de remplissage selon l'une quelconque des revendications 1 à 4, dans lequel les deux éléments formant des ailettes ou plus du rotor (R) sont disposés les uns par rapport aux autres de manière radiale par rapport à l'axe de rotation (D) à des distances angulaires égales, et leur position relative à l'intérieur du rotor (R) dépend de la position angulaire de rotation du rotor dans la chambre principale (12).

6. Séparateur de flux de remplissage selon la revendication 5, dans lequel les deux éléments formant des ailettes (13) ou plus sont disposés de manière à pouvoir être mis en coulissement indépendamment les uns des autres dans une direction radiale par rapport à l'axe de rotation (D), dans des évidements correspondants du rotor (R) en forme d'entaille.

7. Séparateur de flux de remplissage selon la revendication 4, dans lequel chaque système de liaison présente un élément de liaison (18) en forme de barre, qui est inséré, de manière parallèle par rapport à l'axe de rotation (D), dans des ouvertures (17) correspondantes disposées dans les rotors (R) respectifs.

8. Séparateur de flux de remplissage selon la revendication 7, dans lequel trois éléments formant des ailettes (13) sont prévus dans le rotor (R) à des distances angulaires égales les uns par rapport aux autres et, aux fins de la liaison des deux rotors (R, R1, R2) ou plus, trois dispositifs de liaison sont prévus et les ouvertures (17) des dispositifs de liaison sont disposées à des distances angulaires égales les unes par rapport aux autres dans des segments de rotor, lesquels sont formés entre les éléments formant des ailettes (13).

9. Séparateur de flux de remplissage selon la revendication 8, dans lequel la position des ouvertures (17) respectives des dispositifs de liaison pour chacun des rotors (R, R1 à R4) des deux éléments séparateurs (T) ou plus est différente dans les segments de rotor formés entre les éléments formant des ailettes (13).

10. Séparateur de flux de remplissage selon l'une quelconque des revendications 1 à 9, dans lequel les stators (11) respectifs des deux éléments séparateurs (T) ou plus sont reliés les uns aux autres si bien que les chambres principales (12) des éléments séparateurs (T) respectifs adjacents sont alignées les unes avec les autres.

11. Séparateur de flux de remplissage selon la revendication 1, dans lequel le stator (11) présente une zone d'admission (15) et une zone d'évacuation (16), et dans lequel le flux de remplissage s'écoulant depuis la zone d'admission (15) en direction de la zone d'évacuation (16) en passant par la chambre principale (12) entraîne la rotation du rotor (R) de l'élément séparateur (T) respectif.
